# EUROPEAN PATENT APPLICATION

(11) **EP 2 833 240 A2**
(43) Date of publication of application: **04.02.2015**
(21) Application number: 13275248.6
(22) Date of filing: 15.10.2013
(51) Int. Cl.: G06F 1/24, G06F 1/28, G06F 1/30

(54) **Electronic device**

(30) Priority: 29.07.2013 KR 20130089617
(71) Applicant: Samsung Electro-Mechanics Co., Ltd, Suwon, Gyunggi-Do (KR)
(72) Inventor: Lim, Joon Hyung, Gyunggi-do (KR); Lee, Jae Hyung, Gyunggi-do (KR); Cho, Koon Shik, Gyunggi-do (KR)
(74) Representative: Powell, Timothy John

(57) **Abstract**

There is provided an electronic device including: a watchdog timer outputting a reset request signal when a response standby period of time for receiving a response from a target has elapsed; a reset signal generating unit outputting a reset signal to the target on the basis of the reset request signal from the watchdog timer; and a power on reset (POR) unit outputting a reset request signal to the reset signal generating unit when a predetermined period of time has elapsed after power is applied to the electronic device, wherein the power on reset (POR) unit outputs an enable signal to the watchdog timer.

## Description

### CROSS-REFERENCE TO RELATED APPLICATIONS

This application claims the benefit of Korean Patent Application No. 10-2013-0089617 filed on July 29, 2013, with the Korean Intellectual Property Office, the disclosure of which is incorporated herein by reference.

### BACKGROUND OF THE INVENTION

### Field of the Invention

The present invention relates to an electronic device having a function of recovering a system from an abnormal state.

### Description of the Related Art

A watchdog timer is a component used to monitor and recover a system state. Namely, when a system malfunctions and may not be returned to a normal state by itself, the watchdog timer may reset the system.

To this end, the watchdog timer may be periodically updated by the system (i.e., at a predetermined period). When the watchdog timer fails to receive a clear signal (update signal) from a central processing unit (CPU) within the predetermined period, the watchdog timer may output a reset request signal.

In general, the watchdog timer may receive an enable signal from the CPU and may be driven according to the enable signal.

Without the reception of the enable signal, the watchdog timer may not perform a function thereof properly.

For example, when the CPU malfunctions, the watchdog timer may not receive an enable signal therefrom, and thus, it may not serve properly.

In detail, the CPU includes a plurality of control logics (e.g., flipflops). In this case, when ambient noise, electrostatic discharge (ESD), or the like, is applied to the CPU, the CPU may malfunction, so that the control logics (e.g., flipflops) of the CPU may not perform outputting properly. In this case, the watchdog timer may not properly receive an enable signal from the CPU.

In addition, when the system is operated using a battery, current may be continuously consumed in the malfunction state, and thus, the battery may be discharged.

Thus, a method for properly driving the watchdog timer even in the case that a CPU malfunctions is required.

Meanwhile, when an abnormally high voltage is applied to the system (e.g., ESD, electromagnetic interference (EMI), electromagnetic susceptibility (EMS), noise, and the like), the high voltage is required to be sensed to prevent malfunctioning of the control logics.

### [Related art document]

(Patent document 1) Korean Patent Laid-Open Publication No. 2006-0012088
(Patent document 2 Korean Patent Laid-Open Publication No. 2006-0093975

### SUMMARY OF THE INVENTION

An aspect of the present invention provides an electronic device in which a watchdog timer is properly driven even in the case that a central processing unit (CPU) malfunctions.

Another aspect of the present invention provides an electronic device capable of preventing malfunctioning of control logics when an abnormally high voltage (e.g., electrostatic discharge (ESD), electromagnetic interference (EMI), electromagnetic susceptibility (EMS), noise, and the like) is applied to a system.

Another aspect of the present invention provides an electronic device capable of normally recovering a system through various methods in various abnormal voltage states (ESD, low voltage, noise injection, and the like.).

Another aspect of the present invention provides an electronic device capable of restraining a battery discharge phenomenon that may occur when a central processing unit (CPU) malfunctions.

According to an aspect of the present invention, there is provided an electronic device including: a watchdog timer outputting a reset request signal when a response standby period of time for receiving a response from a target has elapsed; a reset signal generating unit outputting a reset signal to the target on the basis of the reset request signal from the watchdog timer; and a power on reset (POR) unit outputting a reset request signal to the reset signal generating unit when a predetermined period of time has elapsed after power is applied to the electronic device, wherein the power on reset (POR) unit outputs an enable signal to the watchdog timer.

When the power on reset (POR) unit outputs the reset request signal, the power on reset (POR) unit may output the enable signal to the watchdog timer.

The electronic device may further include a clock providing unit providing clock information to the watchdog timer.

When a predetermined level of power is received, the clock providing unit may output an enable signal to the watchdog timer.

The electronic device may further include: a high voltage detector detecting a voltage level of the applied power, and outputting a reset request signal to the reset signal generating unit when the voltage level is shifted from being within a dangerous range to being within a stable range.

The electronic device may further include: a power clamping unit limiting the voltage level of the applied power.

The electronic device may further include a brown out detector (BOD) detecting a voltage level of the applied power and outputting a reset request signal to the reset signal generating unit on the basis of the voltage level.

According to another aspect of the present invention, there is provided an electronic device including: a watchdog timer outputting a reset request signal when a response standby period of time for receiving a response from a target has elapsed; a reset signal generating unit outputting a reset signal to the target on the basis of the reset request signal from the watchdog timer; and a high voltage detector detecting a voltage level applied to the electronic device, and outputting a reset request signal to the reset signal generating unit when the voltage level is shifted from being within a dangerous range to being within a stable range.

The electronic device may further include: a power on reset (POR) unit outputting an enable signal to the watchdog timer.

The electronic device may further include: a power clamping unit limiting the applied voltage level.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a block diagram of an electronic device according to an embodiment of the present invention;
FIGS. 2(a), 2(b), and 2(c) are graphs showing an output signal waveform of a brown out detector (BOD) and an output signal waveform of a power on reset (POR) unit according to a voltage level applied to the electronic device; and
FIG. 3 is a graph showing an output signal waveform of a high voltage detector according to a voltage level applied to the electronic device.

### DETAILED DESCRIPTION OF THE EMBODIMENT

Hereinafter, embodiments of the present invention will be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. In the drawings, the shapes and dimensions of elements may be exaggerated for clarity, and the same reference numerals will be used throughout to designate the same or like elements.

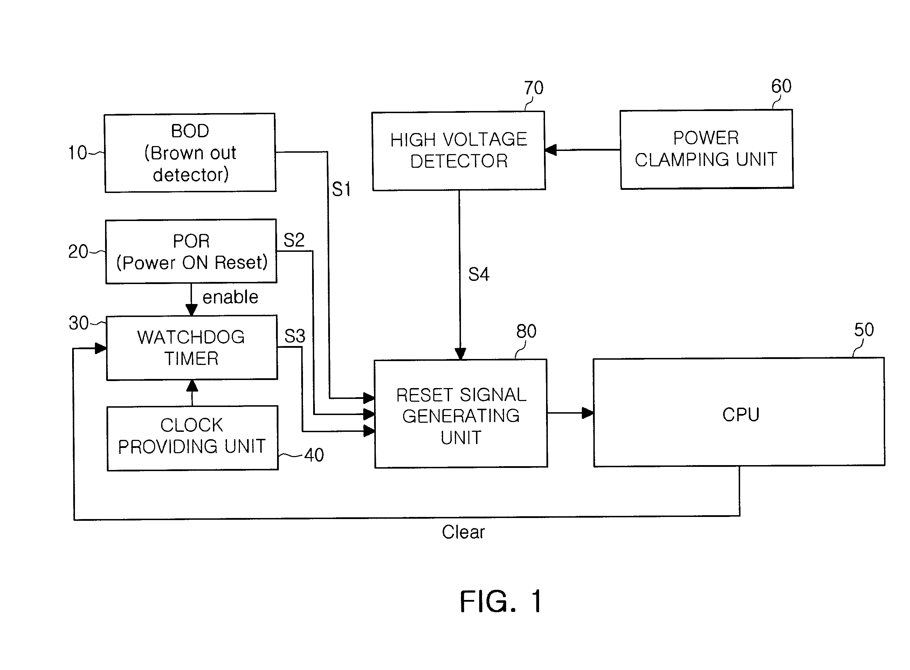

FIG. 1 is a block diagram of an electronic device according to an embodiment of the present invention.

Referring to FIG. 1, the electronic device according to an embodiment of the present invention may include a brown out detector (BOD) 10, a power on reset (POR) unit 20, a watchdog timer 30, a clock providing unit 40, a central processing unit (CPU) 50, a power clamping unit 60, a high voltage detector 70, and a reset signal generating unit 80.

For the convenience of description, in the present embodiment, it is assumed that the reset signal generating unit 80 outputs a reset signal to the CPU 50. The reset signal generating unit 80 may also output a reset signal to a predetermined system on chip (SoC), and the like, as well as to the CPU 50.

Thus, an object to which the reset signal generating unit 80 outputs a reset signal will be defined as a target.

The BOD 10 may detect a voltage level applied to the electronic device, and output a reset request signal to the reset signal generating unit 80 on the basis of the voltage level.

In detail, when a voltage having a level equal to or higher than a predetermined voltage level is applied to the electronic device, the BOD 10 may output the reset request signal to the reset signal generating unit 80.

Due to the BOD, the electronic device may be operated at a normal voltage.

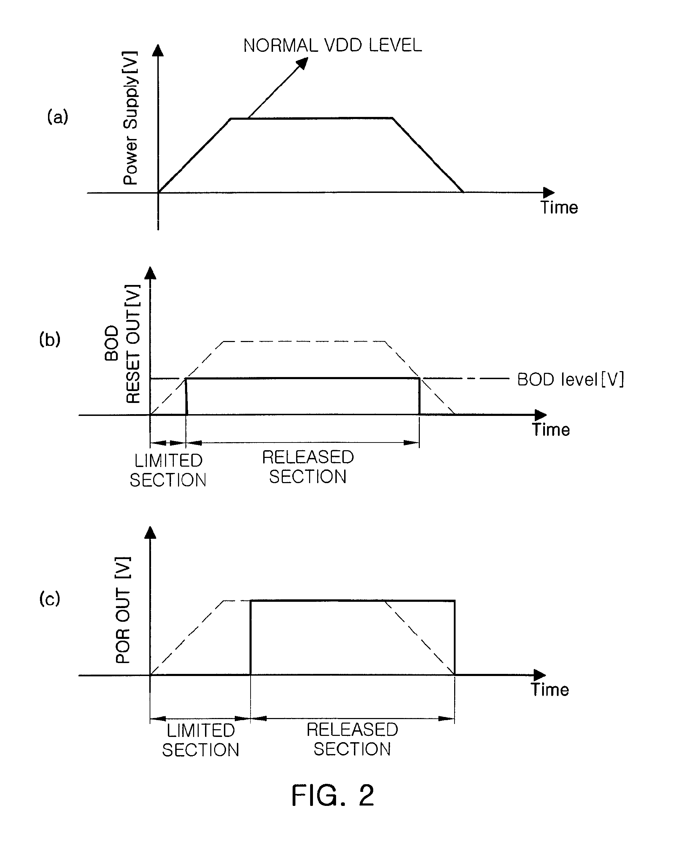

FIGS. 2(a), 2(b), and 2(c) are graphs showing an output signal waveform of a brown out detector (BOD) and an output signal waveform of a power on reset (POR) unit according to a voltage level applied to the electronic device.

FIG. 2(a) is a graph showing a waveform of a voltage level applied to the electronic device.

FIG. 2(b) is a graph showing a signal waveform output from the BOD according to the voltage level applied to the electronic device.

FIG. 2(c) is a graph showing a signal waveform output from the POR according to the voltage level applied to the electronic device.

Referring to FIGS. 2(a) and 2(b), when a voltage having a level lower than a predetermined voltage level (BOD level) is applied to the electronic device, the BOD 10 may limit a driving of the electronic device (a limited section).

When a voltage having a level equal to or higher than the predetermined voltage level (BOD) is applied to the electronic device, the BOD 10 may release the limitation on the driving of the electronic device (a released section).

Namely, the BOD 10 according to the embodiment of the present invention may output a reset request signal S1 to the reset signal generating unit 80 at a point at which the limited section is converted into the released section.

In this manner, the driving of the electronic device according to the embodiment of the present invention may be limited by the BOD 10 at a lower voltage level than a predetermined voltage level.

After a predetermined period of time has elapsed subsequently to the electronic device having power applied thereto, the POR unit 10 may output a reset request signal. The electronic device including the POR unit 20 may be reset at an initial stage of the driving thereof according to the reset request signal output from the POR unit 20.

Preferably, most systems may be operated in a state accurately designated, immediately after power is applied thereto.

Due to the POR unit 20, the electronic device may be reset and operated in a designated state, after power is applied thereto.

Referring to FIGS. 2(a) and 2(c), the POR unit 20 may limit the driving of the electronic device during a predetermined period of time, after voltage is applied to the electronic device (a limited section).

After the predetermined period of time (e.g., several millisecond(s)) has elapsed subsequently to the electronic device having voltage applied thereto, the POR unit 20 may release the limitation on the driving of the electronic device (a released section).

Namely, the POR unit 20 according to the embodiment of the present invention may output a reset request signal S2 to the reset signal generating unit 80 at a point at which the limited section is converted into the released section.

In this manner, the driving of the electronic device according to the embodiment of the present invention may be limited by the POR unit 20 during a predetermined period of time after power is applied thereto.

The POR unit 20 may output an enable signal to the watchdog timer 30. The enable signal may refer to a signal for normally driving the watchdog timer 30.

In a case in which a normal voltage is applied to the electronic device and the normal voltage is stabilized, the POR unit 20 may be constantly normally operated.

Thus, since the watchdog timer 30 is driven on the basis of the enable signal from the POR unit 20, the watchdog timer 30 may be normally operated, regardless of whether or not a target malfunctions.

Also, according to an embodiment of the present invention, when the POR unit 20 outputs the reset request signal S2, it may also output the enable signal to the watchdog timer 30.

The watchdog timer 30 is component used to monitor and recover a system state. Namely, when a target malfunctions and may not be recovered to a normal state by itself, the watchdog timer may reset the target.

To this end, the watchdog timer 30 may be updated by the target at a predetermined period. When the watchdog timer fails to receive a clear signal (update signal) from the target within a predetermined period, the watchdog timer may output a reset request signal.

In other words, when a response standby period of time for receiving a response from the target has elapsed, the watchdog timer 30 may output a reset request signal.

The clock providing unit 40 may provide clock information to the watchdog timer 30.

The watchdog timer 30 may determine an update period on the basis of the clock information.

Meanwhile, the clock providing unit 40 may output an enable signal to the watchdog timer 30.

In a case in which a normal voltage is applied to the electronic device and the normal voltage is stabilized, the clock providing unit 40 may be constantly normally operated. Also, when predetermined power is received, the clock providing unit 40 may output the enable signal to the watchdog timer 30.

Thus, since the watchdog timer 30 is driven on the basis of the enable signal provided from the clock providing unit 40, the watchdog timer 30 can be normally operated, regardless of whether or not the target malfunctions.

In this manner, according to an embodiment of the present invention, the watchdog timer 30 may receive the enable signal from the POR unit 20 or the clock providing unit 40 and may be driven according to the enable signal.

Thus, even in the case that the target malfunctions, the watchdog timer 30 may normally receive the enable signal and properly perform functions thereof.

The watchdog timer 30 may allow a reset signal to be applied to a target that has malfunctioned, to thereby recover the target.

The power clamping unit 60 may limit a voltage level applied to the electronic device.

In detail, when a voltage having a voltage level equal to or higher than that of a rated voltage is applied to the electronic device, the power clamping unit 60 may limit the voltage to be within the rated voltage, and remove a surge current to protect a circuit.

The high voltage detector 70 may detect the applied voltage level, and when the voltage level shifts from being within a dangerous range to being within a stable range, the high voltage detector may output a reset request signal to the reset signal generating unit 80.

Meanwhile, the high voltage detector 70 may obtain voltage level information from the power clamping unit 60.

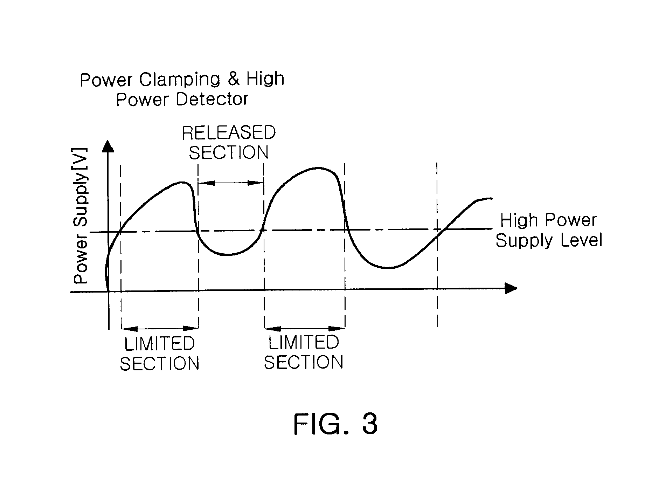

FIG. 3 is a graph showing an output signal waveform of a high voltage detector according to the voltage level applied to the electronic device.

Referring to FIG. 3, when a voltage (within the dangerous range) having a level equal to or higher than a predetermined voltage level (high power supply level) is applied to the electronic device, the high voltage detector 70 may limit the driving of the electronic device (a limited section).

When a voltage (within the stable range) having a level lower than the predetermined voltage level (high power supply level) is applied to the electronic device, the high voltage detector 70 may release the limitation on the driving of the electronic device (a released section).

Namely, at a point at which the limited section is converted into the released section, the high voltage detector 70 according to an embodiment of the present invention may output a reset request signal S4 to the reset signal generating unit 80.

In this manner, the driving of the electronic device according to the embodiment of the present invention may be limited by the high voltage detector 70 at a voltage level equal to or higher than a predetermined voltage level.

The reset signal generating unit 80 may output a reset signal to the target on the basis of reset request signals from the BOD 10, the POR unit 20, the watchdog timer 30, and the high voltage detector 70.

In the electronic device according to an embodiment of the present invention, even in the case that the CPU 50 malfunctions, the watchdog timer 30 may be properly driven.

Also, in the electronic device according to an embodiment of the present invention, when an abnormally high voltage (e.g., electrostatic discharge (ESD), electromagnetic interference (EMI), electromagnetic susceptibility (EMS), noise, or the like) is applied to a system, malfunctioning of control logics may be prevented.

Also, in the electronic device according to an embodiment of the present invention, the system may be normally recovered through various methods in various abnormal voltage states (ESD, low voltage, noise injection, and the like.)

Also, in the electronic device according to an embodiment of the present invention, a battery discharge phenomenon occurring when the CPU 50 malfunctions may be restrained.

In this manner, in the electronic device according to an embodiment of the present invention, after an abnormal voltage is generated, when it is recovered to a normal voltage, the electronic device may be controlled to be rebooted by a reset signal any time to perform a normal operation. Thus, even in an abnormal voltage situation, the system does not malfunction, and when a power supply voltage is stabilized, the electronic device may constantly perform a normal function.

The methods according to the embodiments of the present invention as described above may be individually used or may be combined with each other to be used. Also, operations constituting the respective embodiments may be individually used or may be combined with each other.

Also, the methods as described above may be implemented in a recording medium that may be read by a computer or a device similar thereto, using software, hardware, or a combination thereof.

For hardware implementation, the methods according to embodiments of the present invention described above may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and electrical units for performing other functions.

For software implementation, the procedures and functions according to embodiments of the present invention described above may be implemented in the form of soft modules. The software modules may be implemented by software codes written in an appropriate programming language. The software codes may be stored in a storage unit and executed by a processor.

As set forth above, according to the embodiments of the present invention, the electronic device in which the watchdog timer is properly driven even in the case that the CPU malfunctions may be provided.

Also, according to the embodiments of the present invention, the electronic device capable of preventing malfunctioning of the control logics when an abnormally high voltage (e.g., ESD, EMI, EMS, noise, or the like.) is applied to the system may be provided.

Also, according to the embodiments of the present invention, the electronic device capable of normally recovering a system through various methods in various abnormal voltage states (ESD, low voltage, noise injection, and the like) may be provided.

Also, according to the embodiments of the present invention, the electronic device capable of restraining an occurrence of a battery discharge phenomenon when the CPU malfunctions may be provided.

While the present invention has been shown and described in connection with the embodiments, it will be apparent to those skilled in the art that modifications and variations can be made without departing from the spirit and scope of the invention as defined by the appended claims.

## Claims

1. An electronic device comprising:
a watchdog timer outputting a reset request signal when a response standby period of time for receiving a response from a target has elapsed;
a reset signal generating unit outputting a reset signal to the target on the basis of the reset request signal from the watchdog timer; and
a power on reset (POR) unit outputting a reset request signal to the reset signal generating unit when a predetermined period of time has elapsed after power is applied to the electronic device,
wherein the power on reset (POR) unit outputs an enable signal to the watchdog timer.

2. The electronic device of claim 1, wherein when the power on reset (POR) unit outputs the reset request signal, the power on reset (POR) unit outputs the enable signal to the watchdog timer.

3. The electronic device of claim 1, further comprising a clock providing unit providing clock information to the watchdog timer.

4. The electronic device of claim 3, wherein when a predetermined level of power is received, the clock providing unit outputs an enable signal to the watchdog timer.

5. The electronic device of claim 1, further comprising:
a high voltage detector detecting a voltage level of the applied power, and outputting a reset request signal to the reset signal generating unit when the voltage level is shifted from being within a dangerous range to being within a stable range.

6. The electronic device of claim 5, further comprising:
a power clamping unit limiting the voltage level of the applied power.

7. The electronic device of claim 1, further comprising a brown out detector (BOD) detecting a voltage level of the applied power and outputting a reset request signal to the reset signal generating unit on the basis of the voltage level.

8. An electronic device comprising:
a watchdog timer outputting a reset request signal when a response standby period of time for receiving a response from a target has elapsed;
a reset signal generating unit outputting a reset signal to the target on the basis of the reset request signal from the watchdog timer; and
a high voltage detector detecting a voltage level applied to the electronic device, and outputting a reset request signal to the reset signal generating unit when the voltage level is shifted from being within a dangerous range to being within a stable range.

9. The electronic device of claim 8, further comprising:
a power on reset (POR) unit outputting an enable signal to the watchdog timer.

10. The electronic device of claim 9, further comprising:
a power clamping unit limiting the applied voltage level.
